# EUROPEAN PATENT SPECIFICATION

(11) **EP 4 269 215 B1**
(45) Date of publication and mention of the grant of the patent: **05.11.2025**
(21) Application number: 20966327.7
(22) Date of filing: 22.12.2020
(51) Int. Cl.: B62D 25/02, B62D 25/04, B62D 25/06, B60J 1/02, B60R 13/02

(54) **SIDE WALL OUTER PLATE AND VEHICLE**
SEITENWANDAUSSENPLATTE UND FAHRZEUG
PLAQUE EXTERNE DE PAROI LATÉRALE ET VÉHICULE

(43) Date of publication of application: 01.11.2023
(73) Proprietor: Zhejiang Smart Intelligence Technology Co., Ltd., Ningbo, Zhejiang 315336 (CN)
(72) Inventor: JIANG, Hailin, Hangzhou Bay New District Ningbo, Zhejiang 315336 (CN); FU, Qiang, Hangzhou Bay New District Ningbo, Zhejiang 315336 (CN); SONG, Yongle, Hangzhou Bay New District Ningbo, Zhejiang 315336 (CN); CHEN, Xiaolei, Hangzhou Bay New District Ningbo, Zhejiang 315336 (CN)
(74) Representative: Zaboliene, Reda
(86) International application number: PCT/CN2020/138404
(87) International publication number: WO 2022/133747

(56) References cited:
- CN-A- 102 381 359
- CN-A- 110 809 548
- CN-U- 209 142 235
- US-A- 5 222 336
- GUAN LAIDE: "Analysis and solution on corner wrinkling of side panel A column for automobile", FORGING & STAMPING TECHNOLOGY, ZHONGGUO JIXIE GONGCHENG XUEHUI DUANYA XUEHUI, BEIJING, CN, vol. 42, no. 4, 25 April 2017 (2017-04-25), Beijing, CN , pages 50 - 54, XP055945788, ISSN: 1000-3940, DOI: 10.13330/j.issn.1000-3940.2017.04.009

## Description

### CROSS REFERENCE TO RELATED APPLICATION

The present application is the national phase entry of International Patent Application No. PCT/CN2020/138404, filed on December 22, 2020.

### BACKGROUND OF THE APPLICATION

### Field of the Application

The present application relates to the technical field of vehicle structure, in particular to a side wall outer panel and a vehicle. XP055945788 is the closest prior art document and discloses a side wall outer panel, comprising a first plate body, a second plate body, a third plate body, a first connecting plate, a second connecting plate, and a third connecting plate, wherein the first connecting plate, the second connecting plate and the third connecting plate are connected, the first connecting plate is respectively connected to the first plate body and the second plate body, the second connecting plate is respectively connected to the first plate body and the third plate body, and the third connecting plate is respectively connected to the second plate body and the third plate body.

### Description of Related Art

In the development process of new vehicle models, the connecting positions of the side wall outer panel 4a with the A-pillar outer trim panel 5a and the roof trim panel 2a are an important factor affecting the design and stamping process of the side wall structure. The structural design in this area has a significant impact on material utilization, manufacturing process, manufacturing procedure, appearance matching, and external surface quality. Under the optimal conditions of shape and view angle, the structural design of parts plays a crucial role in process, cost, and mold debugging cycle. In the past development process of vehicle models, cracking and stacking in this area have always been difficult points in vehicle development.

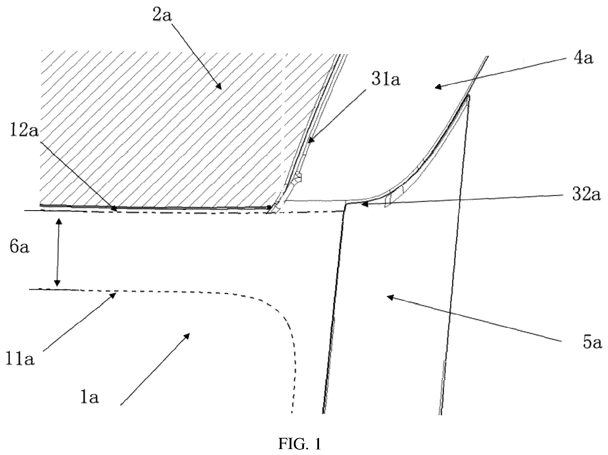

In vehicles with A-pillar outer trim panel 5a and roof trim panel 2a, in order to address the issue of poor surface quality at the sharp corners, the two outer ridges 31a and 32a that converge at the sharp corners will be designed as simple and smooth as possible to facilitate drawing and forming, as shown in FIG. 1. In order to solve the problem of side wall cracking at sharp corners, it is tried to reduce the drawing depth at the sharp corners as much as possible or increase the shaping process. In order to reduce the stamping depth at the sharp corners of the A-pillar, the existing technical solutions need to shorten the upper boundary of the front windshield 1a downwards. The boundary between the front windshield 12a and the roof trim panel 2a is in an docking form without overlap, which can reduce the stamping depth. Although it can solve the stamping problem of the side wall outer panel, it sacrifices the front upper view angle. The black edge 11a of the glass is often lower, and the width 6a of the black edge is shown in FIG. 1.

The existing technology cannot simultaneously balance the styling effect and optimize the upper view angle. Therefore, it is necessary to provide a solution that can achieve good styling effect while also optimizing the upper view angle.

### BRIEF SUMMARY OF THE APPLICATION

In order to simultaneously balance the styling effect and optimize the upper view angle, the present application proposes a side wall outer panel and a vehicle, which are specifically implemented using the following technical solutions.

The present application provides a vehicle comprising a side wall outer panel including a first plate body, a second plate body, a third plate body, a first connecting plate, a second connecting plate, and a third connecting plate, wherein the first connecting plate, the second connecting plate and the third connecting plate are connected, the first connecting plate is respectively connected to the first plate body and the second plate body, the second connecting plate is respectively connected to the first plate body and the third plate body, and the third connecting plate is respectively connected to the second plate body and the third plate body;
the first plate body is provided with a first arc-shaped ridge, a second arc-shaped ridge and a straight ridge, a first spherical rounded corner is formed between the first arc-shaped ridge and the second arc-shaped ridge, a second spherical rounded corner is formed between the first arc-shaped ridge and the straight ridge, the first arc-shaped ridge and the straight ridge are used to abut against a roof trim panel, and the second arc-shaped ridge is used to abut against an outer trim panel;
the second plate body is used to connect a front windshield and the roof trim panel;
the third plate body is used to connect the outer trim panel.

A further improvement of the side wall outer panel provided by the present application is that the second plate body is provided with a first step, a second step and a third step, the first step is used to support the roof trim panel, the second step is used to support the front windshield, and the third step is used to connect a glass adhesive layer.

A further improvement of the side wall outer panel provided by the present application is that the distance between the first step and the first plate body is equal to the sum of the thickness of the roof trim panel and a preset safety clearance;
the distance between the second step and the first plate body is equal to the sum of the thickness of the roof trim panel, the thickness of the front windshield and the preset safety clearance;
the distance between the third step and the second step is equal to the difference between the thickness of the glass adhesive layer and the preset safety clearance.

A further improvement of the side wall outer panel provided by the present application is that the first connecting plate is provided with a sloping triangular rib.

A further improvement of the side wall outer panel provided by the present application is that the preset safety clearance is greater than 3 mm;
the distance between one end of the sloping triangular rib near the first spherical rounded corner and the front windshield is greater than 3 mm, and the distance between one end of the sloping triangular rib near the second spherical rounded corner and the roof trim panel is not less than 3 mm and not more than 5 mm.

A further improvement of the side wall outer panel provided by the present application is that the first angle between the sloping triangular rib and the stamping direction is not less than 35°.

A further improvement of the side wall outer panel provided by the present application is that the sloping triangular rib is trumpet-shaped, wherein the width of the sloping triangular rib at the end near the second spherical rounded corner is smaller than the width of the sloping triangular rib at the end near the first spherical rounded corner.

A further improvement of the side wall outer panel provided by the present application is that the second angle between the first arc-shaped ridge and the second arc-shaped ridge is greater than 60°, the third angle between the first arc-shaped ridge and the straight ridge is greater than 135°.

A further improvement of the side wall outer panel provided by the present application is that the fourth angle between the second arc-shaped ridge and the stamping direction is equal to 3°.

A further improvement of the side wall outer panel provided by the present application is that the width of the first step on the side near the second spherical rounded corner is equal to 3 mm;
a first welding point is provided on the first step, and the width of the first step at the first welding point is equal to 16 mm.

A further improvement of the side wall outer panel provided by the present application is that the third plate body is provided with a wrinkle absorbing rib.

A further improvement of the side wall outer panel provided by the present application is that the depth of the wrinkle absorbing rib is equal to 2 mm.

In addition, the present application also provides a vehicle including an outer trim panel, a roof trim panel, a front windshield, and a side wall outer panel as described above. The first plate body of the side wall outer panel abuts against the roof trim panel and the outer trim panel, the second plate body of the side wall outer panel is connected to the front windshield and the roof trim panel, and the third plate body of the side wall outer panel is connected to the outer trim panel.

By optimizing and improving the structure of the side wall outer panel, the present application can overcome the adverse effects of deeper stamping depth and more complex ridges on the two sharp corners, while reducing manufacturing costs and stamping processes.

The present application solves the problem of poor surface quality of the side wall outer panel in the split areas of the roof trim panel and the A-pillar outer trim panel, while taking into account the styling effect and optimizing the upper view angle, solving the problem of easy cracking of the side wall outer panel in the split areas of the roof trim panel and the A-pillar outer trim panel, and solving the problem of material stacking and wrinkling of the side wall outer panel in the split areas of the side walls and welding edges of the roof trim panel and the A-pillar outer trim panel. It is also possible to optimize the number of processes for the side wall outer panel in this area.

In the present application, the design of rounded corners at the two sharp corners and the design of reducing the drawing depth at the arc-shaped ridges allow for more freedom of selection in the shape design, rather than being limited to simple straight line matching. The design of the present application in solving cracking during molding can not only reduce the molding process of this area to single process, but also achieve the goal of hiding the upper boundary of the front windshield into the roof trim panel, thereby increasing the front upper view angle.

### BRIEF DESCRIPTION OF THE DRAWINGS

In order to more clearly illustrate the technical solutions of the embodiments of the present application or the prior art, the drawings used below for the description of the embodiments or the prior art will be introduced briefly. It is obvious that the accompanying drawings in the following description are only some embodiments of the present application. For those skilled in the art, other drawings can be obtained based on these drawings without creative work.
FIG. 1 is a schematic diagram of the connection structure between the front windshield, roof trim panel, side wall outer panel and A-pillar outer trim panel in the prior art.
FIG. 2 is a schematic diagram of the connection structure between the side wall outer panel, the front windshield, the roof trim panel and the A-pillar outer trim panel provided in the first embodiment of the present application.
FIG. 3 is a structural schematic diagram of the side wall outer panel provided in the first embodiment of the present application.
FIG. 4 is a cross-sectional schematic diagram along the A-A direction in FIG. 2.
FIG. 5 is a cross-sectional schematic diagram along the B-B direction in FIG. 2.
FIG. 6 is a schematic diagram of the welding point positions between the side wall outer panel, the front windshield, the roof trim panel and the A-pillar outer trim panel provided in the first embodiment of the present application.

### DETAILED DESCRIPTION OF THE APPLICATION

The following will provide a clear and complete description of the technical solution in the embodiments of the present application in conjunction with the accompanying drawings. Obviously, the described embodiments are only part of the embodiments of the present application, not all of the embodiments. Based on the embodiments in the present application, all other embodiments obtained by those skilled in the art without creative work shall fall within the scope of protection of the present application.

As shown in FIG. 1, in the prior art, the boundary between the front windshield 12a and the roof trim panel 2b is in a docking form without any overlap. The black edge 11a of the glass is often lower, and the effect of the front and upper view is poor. In order to simultaneously balance the styling effect and optimize the upper view angle, the present application provides a side wall outer panel and a vehicle.

### First embodiment

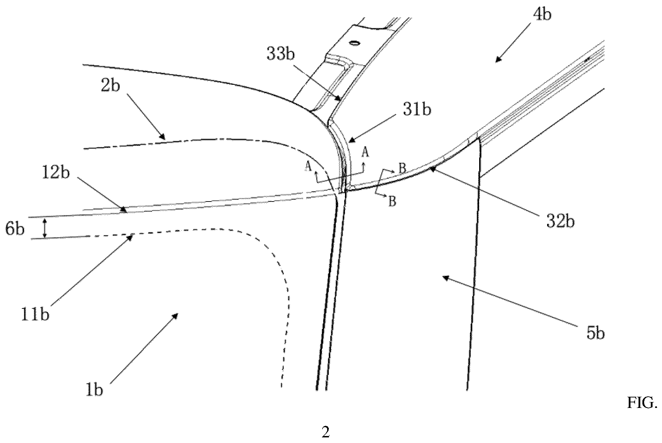

As shown in FIGs. 2 to 6, the first embodiment provides a side wall outer panel 4b, which includes a first plate body 101, a second plate body 102, a third plate body 103, a first connecting plate 111, a second connecting plate 112, and a third connecting plate 113. The first connecting plate 111, the second connecting plate 112 and the third connecting plate 113 are connected. The first connecting plate 111 is respectively connected to the first plate body 101 and the second plate body 102. The second connecting plate 112 is respectively connected to the first plate body 101 and the third plate body 103. The third connecting plate 113 is respectively connected to the second plate body 102 and the third plate body 103.

The first plate body 101 is provided with a first arc-shaped ridge 31b, a second arc-shaped ridge 32b, and a straight ridge 33b. A first spherical rounded corner 82 is formed between the first arc-shaped ridge 31b and the second arc-shaped ridge 32b. A second spherical rounded corner 81 is formed between the first arc-shaped ridge 31b and the straight ridge 33b. The first arc-shaped ridge 31b and the straight ridge 33b are used to abut against a roof trim panel 2b. The second arc-shaped ridge 32b is used to abut against an outer trim panel 5b.

The second plate body 102 is used to connect the front windshield 1b and the roof trim panel 2b. The third plate body 103 is used to connect the outer trim panel 5b.

When the upper boundary 12b of the front windshield 1b is extended below the roof trim panel 2b, the width 6b of the black edge 11b can be reduced, thereby maximizing and optimizing the front upper view angle. In this way, it is necessary to deepen the punching depth of the side wall outer panel 4b at the connecting positions with the A-pillar outer trim panel 5b and the roof trim panel 2b. Furthermore, it is also necessary to balance the styling effect by setting more complex arc-shaped ridges.

In this embodiment, the outer trim panel 5b refers to the A-pillar outer trim panel 5b. The second plate body 102 of the side wall outer panel 4b can be used to connect the front windshield 1b and provide support for the front windshield 1b that is extended below the roof trim panel 2b. The first spherical rounded corner 82 and the second spherical rounded corner 81 are respectively provided at the two sharp corner positions of the first plate body 101, and spheroidization treatment is performed on the two sharp corners to form the first spherical rounded corner 82 and the second spherical rounded corner 81, respectively. This can protect the sharp corners from cracking during the stamping process and overcome the impact of complex ridges on the external surface quality, and by designing the size of spherical rounded corners reasonably, it can protect the forming of rounded corners from cracking.

Further, the second plate body 102 is provided with a first step 71, a second step 72 and a third step 73. The first step 71 is used to support the roof trim panel 2b, the second step 72 is used to support the front windshield 1b, and the third step 73 is used to connect a glass adhesive layer.

The drawing depth at the first spherical rounded corner 82 is relatively deep. In order to avoid the first spherical rounded corner 82 from being drawn and cracked during the drawing process, by designing the first step 71, the second step 72 and the third step 73 in this embodiment, the depth is divided by three steps, and the second plate body 102 is designed as a three-step form, thus protecting the first spherical rounded corner 82 from being drawn and cracked during the drawing process, which can enable the area to be drawn and formed at one time, so as to solve the cracking problem here.

Further, the distance H1 between the first step 71 and the first plate body 101 is equal to the sum of the thickness of the roof trim panel 2b and a preset safety clearance H3. The distance H2 between the second step 72 and the first plate body 101 is equal to the sum of the thickness of the roof trim panel 2b, the thickness of the front windshield 1b and the preset safety clearance H3. The distance between the third step 73 and the second step 72 is equal to the difference between the thickness of the glass adhesive layer and the preset safety clearance H3. In this embodiment, the depths of the first step 71, the second step 72 and the third step 73 are gradually changed and deepened, which can alleviate the problem of punching cracking caused by sharp changes in depth.

Further, the first connecting plate 111 is provided with a sloping triangular rib 92.

In this embodiment, by setting a sloping triangular rib 92 on the first connecting plate 111, the drawing depth can be reduced, and the adverse effect of drawing forming on the appearance of the side wall can be improved, ensuring the forming of the first arc-shaped ridge 31b, especially preventing the side wall in this section from cracking during drawing, and solving the problem of cracking of the deepened side wall outer panel 4b during drawing.

Further, the preset safety clearance H3 is greater than 3 mm. The distance between one end of the sloping triangular rib 92 near the first spherical rounded corner 82 and the front windshield 1b is greater than 3 mm. The distance between one end of the sloping triangular rib 92 near the second spherical rounded corner 81 and the roof trim panel 2b is not less than 3 mm and not more than 5 mm. On this basis, the first angle θ3 between the sloping triangular rib 92 and the stamping direction is expanded as much as possible. The larger the first angle θ3, the more conducive it is to molding.

Further, the first angle θ3 between the sloping triangular rib 92 and the stamping direction is not less than 35°.

Further, the sloping triangular rib 92 is trumpet-shaped, wherein the width of the sloping triangular rib 92 at the end near the second spherical rounded corner 81 is smaller than the width of the sloping triangular rib 92 at the end near the first spherical rounded corner 82.

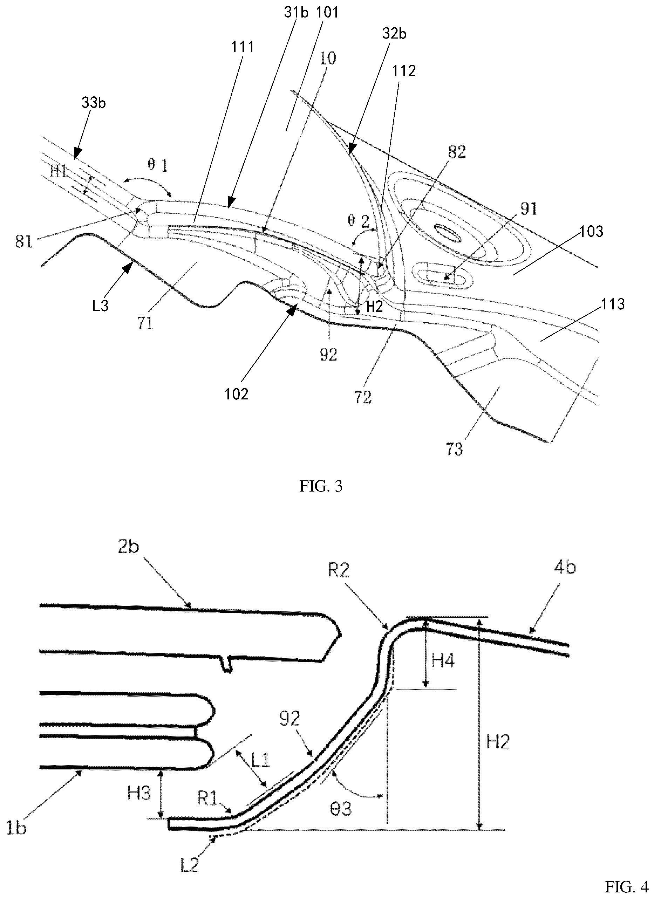

In this embodiment, the sloping triangular rib 92 is designed in a trumpet shape. The width of the sloping triangular rib 92 at the end near the second spherical rounded corner 81 is smaller than the width of the sloping triangular rib 92 at the end near the first spherical rounded corner 82, that is, the sloping triangular rib 92 gradually increases from the position near the second spherical rounded corner 81 to the position near the first spherical rounded corner 82. In other words, the upper boundary 10 of the sloping triangular rib 92 gradually rises from the round corner R1 at the root of the first step 71 with smooth transition until approaching the outer surface of the first plate body 101. In this embodiment, under the condition of continuously deepening depth, by gradually expanding the size of the sloping triangular rib 92, the length of the drawn line L2 (dashed line in FIG. 4) can always be maintained within a uniform range. This will help to improve the appearance quality of the drawn and stamped parts, and can further protect the side wall of the first arc-shaped ridge 31b from cracking during the drawing process. The length of the drawn line refers to the distance of material flow during the stamping and drawing process, and it is better to have a shorter distance. In this embodiment, the first arc-shaped ridge 31b, the second arc-shaped ridge 32b and the straight ridge 33b are all subjected to rounding treatment. In FIG. 4, R2 is the rounded corner of the first arc-shaped ridge 31b, and H4 is the straight segment that matches the roof trim panel 2b.

Further, the second angle θ2 between the first arc-shaped ridge 31b and the second arc-shaped ridge 32b is greater than 60°. The third angle θ1 between the first arc-shaped ridge 31b and the straight ridge 33b is greater than 135°.

The first spherical rounded corner 82 and the second spherical rounded corner 81 are rounded corners with appearance, so the rounded corners should not be too large and should be aesthetically pleasing. Additionally, the second angle θ2 and the third angle θ1 need to be limited. A small angle not only makes it difficult to shape, but also has a serious impact on the appearance quality. Therefore, the recommended value of the second angle θ2 between the first arc-shaped ridge 31b and the second arc-shaped ridge 32b is greater than 60°, and the recommended value of the third angle θ1 between the first arc-shaped ridge 31b and the straight ridge 33b is greater than 135°, which facilitates molding and ensures good appearance quality.

Further, the fourth angle θ4 between the second arc-shaped ridge 32b and the stamping direction is equal to 3°.

In order to reduce unnecessary stamping processes, in this embodiment, the draft angle (fourth angle θ4) at the second arc-shaped ridge 32b is designed as a positive angle in the Z direction, with a specific value of +3° in the Z direction, that is, the fourth angle θ4 between the second arc-shaped ridge 32b and the stamping direction equals 3°, which saves the shaping process here. The value of the fourth angle θ4 matches the A-pillar outer trim panel 5b.

Further, the width of the first step 71 on the side near the second spherical rounded corner 81 is equal to 3 mm. A first welding point P3 is provided on the first step 71, and the width of the first step 71 at the first welding point P3 is equal to 16 mm.

In this type of structure, wrinkling often occurs on the outer surface around sharp corners. To solve the wrinkling problem, in this embodiment, the trimming line L3 (i.e., the boundary line) of the second plate body 102 can be adjusted to minimize the width of the first step 71 on the side near the second spherical rounded corner 81 as much as possible. It is preferable to make the width of the first step 71 on the side near the second spherical rounded corner 81 equal to 3 mm, so that the wrinkled part can be removed.

In this embodiment, a first welding point P3 for connecting the side wall outer panel 4b and the roof trim panel 2b is provided on the first step 71, a second welding point P1 for connecting the side wall outer panel 4b and the A-pillar outer trim panel 5b is provided on the third step 73, a third welding point P2 for connecting the A-pillar outer trim panel 5b and the A-pillar inner panel is provided on the A-pillar outer trim panel 5b, and a fourth welding point P4 for connecting the side wall outer panel 4b and the roof trim panel 2b is further provided on the side wall outer panel 4b. In this embodiment, considering that the distance between the second welding point P1 and the fourth welding point P4 is too long, the width at the first welding point P3 has been widened, so that the width of the first step 71 at the first welding point P3 is equal to 16 mm.

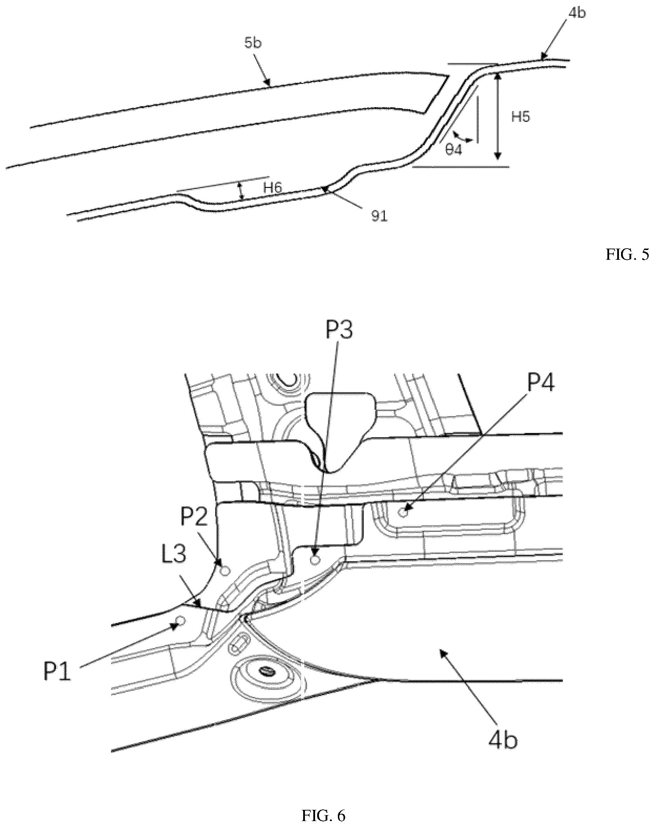

Further, the third plate body 103 is provided with a wrinkle absorbing rib 91. In this embodiment, the wrinkle absorbing rib 91 (concave rib) is designed according to actual needs to solve the problem of wrinkling and stacking of parts. Further, the depth of the wrinkle absorbing rib 91 is equal to 2 mm to avoid the first spherical rounded corner 82 from cracking caused by the excessive depth of the wrinkle absorbing rib 91. In FIG. 5, H6 represents the depth of the wrinkle absorbing rib 91, and H5 represents the forming depth on one side of the second arc-shaped ridge 32b.

By optimizing and improving the structure of the side wall outer panel 4b, the present application can overcome the adverse effects of deeper stamping depth and more complex ridges on the two sharp corners, while reducing manufacturing costs and stamping processes.

The present application solves the problem of poor surface quality of the side wall outer panel 4b in the split areas of the roof trim panel 2b and the A-pillar outer trim panel 5b, while taking into account the styling effect and optimizing the upper view angle, solving the problem of easy cracking of the side wall outer panel 4b in the split areas of the roof trim panel 2b and the A-pillar outer trim panel 5b, and solving the problem of material stacking and wrinkling of the side wall outer panel 4b in the split areas of the side walls and welding edges of the roof trim panel 2b and the A-pillar outer trim panel 5b. It is also possible to optimize the number of processes for the side wall outer panel 4b in this area.

In the present application, the design of rounded corners at the two sharp corners and the design of reducing the drawing depth at the arc-shaped ridges allow for more freedom of selection in the shape design, rather than being limited to simple straight line matching. The design of the present application in solving cracking during molding can not only reduce the molding process of this area to single process, but also achieve the goal of hiding the upper boundary 12b of the front windshield 1b into the roof trim panel 2b, thereby increasing the front upper view angle.

### Second embodiment

This embodiment provides a vehicle including an outer trim panel 5b, a roof trim panel 2b, a front windshield 1b, and a side wall outer panel 4b in the first embodiment. The first plate body 101 of the side wall outer panel 4b abuts against the roof trim panel 2b and the outer trim panel 5b, the second plate body 102 of the side wall outer panel 4b is connected to the front windshield 1b and the roof trim panel 2b, and the third plate body 103 of the side wall outer panel 4b is connected to the outer trim panel 5b.

In this embodiment, the second plate body 102 of the side wall outer panel 4b is connected to the front windshield 1b and provides support for the front windshield 1b that is extended below the roof trim panel 2b. The first spherical rounded corner 82 and the second spherical rounded corner 81 are respectively provided at the two sharp corner positions of the first plate body 101, and spheroidization treatment is performed on the two sharp corners to form the first spherical rounded corner 82 and the second spherical rounded corner 81. This can protect the sharp corners from cracking during the stamping process and overcome the impact of complex ridges on the external surface quality, and by designing the size of spherical rounded corners reasonably, it can protect the forming of rounded corners from cracking, thus overcoming the problems of stamping cracking, wrinkling, and poor surface quality caused by the deep stamping depth of the side wall outer panel 4b at the connecting positions with the A-pillar outer trim panel 5b and the roof trim panel 2b. In this embodiment, the upper boundary 12b of the front windshield 1b is extended below the roof trim panel 2b, which can maximize and optimize the front upper view angle. Also, this embodiment sets more complex arc-shaped ridges to balance the styling effect.

The present application solves the problem of poor surface quality of the side wall outer panel 4b in the split areas of the roof trim panel 2b and the A-pillar outer trim panel 5b, while taking into account the styling effect and optimizing the upper view angle, solving the problem of easy cracking of the side wall outer panel 4b in the split areas of the roof trim panel 2b and the A-pillar outer trim panel 5b, and solving the problem of material stacking and wrinkling of the side wall outer panel 4b in the split areas of the side walls and welding edges of the roof trim panel 2b and the A-pillar outer trim panel 5b. It is also possible to optimize the number of processes for the side wall outer panel 4b in this area.

In the present application, the design of rounded corners at the two sharp corners and the design of reducing the drawing depth at the arc-shaped ridges allow for more freedom of selection in the shape design, rather than being limited to simple straight line matching. The design of the present application in solving cracking during molding can not only reduce the molding process of this area to single process, but also achieve the goal of hiding the upper boundary 12b of the front windshield 1b into the roof trim panel 2b, thereby increasing the front upper view angle.

## Claims

1. A vehicle, comprising an outer trim panel (5b), a roof trim panel (2b), a front windshield (1b), and a side wall outer panel (4b), the side wall outer panel (4b) comprising a first plate body (101), a second plate body (102), a third plate body (103), a first connecting plate (111), a second connecting plate (112), and a third connecting plate (113), wherein the first connecting plate (111), the second connecting plate (112) and the third connecting plate (113) are connected, the first connecting plate (111) is respectively connected to the first plate body (101) and the second plate body (102), the second connecting plate (112) is respectively connected to the first plate body (101) and the third plate body (103), and the third connecting plate (113) is respectively connected to the second plate body (102) and the third plate body (103);
the first plate body (101) is provided with a first arc-shaped ridge (31b), a second arc-shaped ridge (32b) and a straight ridge (33b), a first spherical rounded corner (82) is formed between the first arc-shaped ridge (31b) and the second arc-shaped ridge (32b), a second spherical rounded corner (81) is formed between the first arc-shaped ridge (31b) and the straight ridge (33b), the first arc-shaped ridge (31b) and the straight ridge (33b) are used to abut against the roof trim panel (2b), and the second arc-shaped ridge (32b) is used to abut against the outer trim panel (5b);
the second plate body (102) is used to connect the front windshield (1b) and the roof trim panel (2b);
the third plate body (103) is used to connect the outer trim panel (5b);
an upper boundary (12b) of the front windshield (1b) is extended below the roof trim panel (2b) to hide the upper boundary (12b) of the front windshield (1b) into the roof trim panel (2b).

2. The vehicle as claimed in claim 1, wherein the second plate body (102) is provided with a first step (71), a second step (72) and a third step (73), the first step (71) is used to support the roof trim panel (2b), the second step (72) is used to support the front windshield (1b), and the third step (73) is used to connect a glass adhesive layer.

3. The vehicle as claimed in claim **2,** wherein the distance between the first step (71) and the first plate body (101) is equal to the sum of the thickness of the roof trim panel (2b) and a preset safety clearance (H3);
the distance between the second step (72) and the first plate body (101) is equal to the sum of the thickness of the roof trim panel (2b), the thickness of the front windshield (1b) and the preset safety clearance (H3);
the distance between the third step (73) and the second step (72) is equal to the difference between the thickness of the glass adhesive layer and the preset safety clearance (H3).

4. The vehicle as claimed in claim **3,** wherein the first connecting plate (111) is provided with a sloping triangular rib (92).

5. The vehicle as claimed in claim **4,** wherein the preset safety clearance (H3) is greater than 3 mm;
the distance between one end of the sloping triangular rib (92) near the first spherical rounded corner (82) and the front windshield (1b) is greater than 3 mm, and the distance between one end of the sloping triangular rib (92) near the second spherical rounded corner (81) and the roof trim panel (2b) is not less than 3 mm and not more than 5 mm.

6. The vehicle as claimed in claim **4,** wherein the first angle (θ3) between the sloping triangular rib and the stamping direction is not less than 35°.

7. The vehicle as claimed in claim **4,** wherein the sloping triangular rib (92) is trumpet-shaped, wherein the width of the sloping triangular rib (92) at the end near the second spherical rounded corner (81) is smaller than the width of the sloping triangular rib (92) at the end near the first spherical rounded corner (82).

8. The vehicle as claimed in claim **1,** wherein the second angle (θ2) between the first arc-shaped ridge (31b) and the second arc-shaped ridge (32b) is greater than 60°, the third angle (θ1) between the first arc-shaped ridge (31b) and the straight ridge (33b) is greater than 135°.

9. The vehicle as claimed in claim **1,** wherein the fourth angle (θ4) between the second arc-shaped ridge (32b) and the stamping direction is equal to 3°.

10. The vehicle as claimed in claim **2,** wherein the width of the first step (71) on the side near the second spherical rounded corner (81) is equal to 3 mm;
a first welding point (P3) is provided on the first step (71), and the width of the first step (71) at the first welding point (P3) is equal to 16 mm.

11. The vehicle as claimed in claim **10,** wherein the third plate body (103) is provided with a wrinkle absorbing rib (91).

12. The vehicle as claimed in claim **11,** wherein the depth of the wrinkle absorbing rib (91) is equal to 2 mm.

## Patentansprüche

1. Fahrzeug, umfassend eine Außenverkleidungstafel (5b), eine Dachverkleidungstafel (2b), eine vordere Windschutzscheibe (1b) und eine Seitenwandaußentafel (4b), die Seitenwandaußentafel (4b) einen ersten Plattenkörper (101), einen zweiten Plattenkörper (102), einen dritten Plattenkörper (103), eine erste Anschlussplatte (111), eine zweite Anschlussplatte (112) und eine dritte Anschlussplatte (113) umfasst, wobei die erste Anschlussplatte (111), die zweite Anschlussplatte (112) und die dritte Anschlussplatte (113) miteinander verbunden sind, wobei die erste Anschlussplatte (111) jeweils mit dem ersten Plattenkörper (101) und dem zweiten Plattenkörper (102) verbunden ist, wobei die zweite Anschlussplatte (112) jeweils mit dem ersten Plattenkörper (101) und dem dritten Plattenkörper (103) verbunden ist und die dritte Anschlussplatte (113) jeweils mit dem zweiten Plattenkörper (102) und dem dritten Plattenkörper (103) verbunden ist;
der erste Plattenkörper (101) mit einer ersten bogenförmigen Rippe (31b), einer zweiten bogenförmigen Rippe (32b) und einer geraden Rippe (33b) vorgesehen ist, wobei eine erste kugelförmige abgerundete Ecke (82) zwischen der ersten bogenförmigen Rippe (31b) und der zweiten bogenförmigen Rippe (32b) gebildet wird, eine zweite kugelförmige abgerundete Ecke (81) zwischen der ersten bogenförmigen Rippe (31b) und der geraden Rippe (33b) gebildet ist, die erste bogenförmige Rippe (31b) und die gerade Rippe (33b) zur Anlage an der Dachverkleidungstafel (2b) verwendet werden und die zweite bogenförmige Rippe (32b) zur Anlage an der Außenverkleidungstafel (5b) verwendet wird;
wobei der zweite Plattenkörper (102) zur Verbindung der vorderen Windschutzscheibe (1b) und der Dachverkleidungstafel (2b) verwendet wird;
der dritte Plattenkörper (103) zur Verbindung der Außenverkleidungstafel (5b) verwendet wird;
eine obere Begrenzung (12b) der vorderen Windschutzscheibe (1b) unterhalb der Dachverkleidungstafel (2b) verlängert ist, so dass die obere Begrenzung (12b) der vorderen Windschutzscheibe (1b) in der Dachverkleidungstafel (2b) verdeckt ist.

2. Fahrzeug nach Anspruch **1,** wobei der zweite Plattenkörper (102) mit einer ersten Stufe (71), einer zweiten Stufe (72) und einer dritten Stufe (73) vorgesehen ist, wobei die erste Stufe (71) zum Stützen der Dachverkleidungstafel (2b) verwendet wird, die zweite Stufe (72) zum Stützen der vorderen Windschutzscheibe (1b) verwendet wird und die dritte Stufe (73) zum Verbinden einer Glasklebeschicht verwendet wird.

3. Fahrzeug nach Anspruch **2,** wobei der Abstand zwischen der ersten Stufe (71) und dem ersten Plattenkörper (101) gleich der Summe aus der Dicke der Dachverkleidungstafel (2b) und einem voreingestellten Sicherheitsspielraum (H3) ist;
der Abstand zwischen der zweiten Stufe (72) und dem ersten Plattenkörper (101) gleich der Summe aus der Dicke der Dachverkleidungstafel (2b), der Dicke der vorderen Windschutzscheibe (1b) und dem voreingestellten Sicherheitsspielraum (H3) ist;
der Abstand zwischen der dritten Stufe (73) und der zweiten Stufe (72) gleich der Differenz zwischen der Dicke der Glasklebeschicht und dem voreingestellten Sicherheitsspielraum (H3) ist.

4. Fahrzeug nach Anspruch **3,** wobei die erste Anschlussplatte (111) mit einer schrägen dreieckigen Wulst (92) vorgesehen ist.

5. Fahrzeug nach Anspruch **4,** wobei der voreingestellte Sicherheitsspielraum (H3) größer als 3 mm ist;
wobei der Abstand zwischen einem Ende der schrägen dreieckigen Wulst (92) nahe der ersten kugelförmigen abgerundeten Ecke (82) und der vorderen Windschutzscheibe (1b) größer als 3 mm ist und der Abstand zwischen einem Ende der schrägen dreieckigen Wulst (92) nahe der zweiten kugelförmigen abgerundeten Ecke (81) und der Dachverkleidungstafel (2b) nicht weniger als 3 mm und nicht mehr als 5 mm ist.

6. Fahrzeug nach Anspruch **4,** wobei der erste Winkel (θ3) zwischen der schrägen dreieckigen Wulst und der Stanzrichtung nicht weniger als 35° ist.

7. Fahrzeug nach Anspruch **4,** wobei die schräge dreieckige Wulst (92) trompetenförmig ist, wobei die Breite der schrägen dreieckigen Wulst (92) an dem Ende nahe der zweiten kugelförmigen abgerundeten Ecke (81) kleiner ist als die Breite der schrägen dreieckigen Wulst (92) an dem Ende nahe der ersten kugelförmigen abgerundeten Ecke (82).

8. Fahrzeug nach Anspruch **1,** wobei der zweite Winkel (θ2) zwischen der ersten bogenförmigen Rippe (31b) und der zweiten bogenförmigen Rippe (32b) größer als 60° ist und der dritte Winkel (θ1) zwischen der ersten bogenförmigen Rippe (31b) und der geraden Rippe (33b) größer als 135° ist.

9. Fahrzeug nach Anspruch **1,** wobei der vierte Winkel (θ4) zwischen der zweiten bogenförmigen Rippe (32b) und der Stanzrichtung 3° ist.

10. Fahrzeug nach Anspruch **2,** wobei die Breite der ersten Stufe (71) an der Seite nahe der zweiten kugelförmigen abgerundeten Ecke (81) gleich 3 mm ist;
wobei ein erster Schweißpunkt (P3) auf der ersten Stufe (71) vorgesehen ist und die Breite der ersten Stufe (71) am ersten Schweißpunkt (P3) gleich 16 mm ist.

11. Fahrzeug nach Anspruch **10,** wobei der dritte Plattenkörper (103) mit einer Faltenaufnahmewulst (91) vorgesehen ist.

12. Fahrzeug nach Anspruch **11,** wobei die Tiefe der Faltenaufnahmewulst (91) gleich 2 mm ist.

## Revendications

1. Véhicule, comprenant un panneau de garniture externe (5b), un panneau de garniture de toit (2b), un pare-brise avant (1b) et un panneau externe de paroi latérale (4b), le panneau externe de paroi latérale (4b) comprenant un premier corps de plaque (101), un deuxième corps de plaque (102), un troisième corps de plaque (103), une première plaque de liaison (111), une deuxième plaque de liaison (112) et une troisième plaque de liaison (113), dans lequel la première plaque de liaison (111), la deuxième plaque de liaison (112) et la troisième plaque de liaison (113) sont reliées, la première plaque de liaison (111) est respectivement reliée au premier corps de plaque (101) et au deuxième corps de plaque (102), la deuxième plaque de liaison (112) est respectivement reliée au premier corps de plaque (101) et au troisième corps de plaque (103), et la troisième plaque de liaison (113) est respectivement reliée au deuxième corps de plaque (102) et au troisième corps de plaque (103) ;
le premier corps de plaque (101) est pourvu d'une première arête en forme d'arc (31b), d'une seconde arête en forme d'arc (32b) et d'une arête droite (33b), un premier coin arrondi sphérique (82) est formé entre la première arête en forme d'arc (31b) et la seconde arête en forme d'arc (32b), un second coin arrondi sphérique (81) est formé entre la première arête en forme d'arc (31b) et la arête droite (33b), la première arête en forme d'arc (31b) et l'arête droite (33b) sont utilisées pour venir en butée contre le panneau de garniture de toit (2b), et la seconde arête en forme d'arc (32b) est utilisée pour venir en butée contre le panneau de garniture externe (5b) ;
le deuxième corps de plaque (102) est utilisé pour relier le pare-brise avant (1b) et le panneau de garniture de toit (2b) ;
le troisième corps de plaque (103) est utilisé pour relier le panneau de garniture externe (5b) ;
une limite supérieure (12b) du pare-brise avant (1b) s'étend au-dessous du panneau de garniture de toit (2b) afin de dissimuler la limite supérieure (12b) du pare-brise avant (1b) dans le panneau de garniture de toit (2b).

2. Véhicule selon la revendication 1, dans lequel le deuxième corps de plaque (102) est pourvu d'une première marche (71), d'une deuxième marche (72) et d'une troisième marche (73), la première marche (71) est utilisée pour soutenir le panneau de garniture de toit (2b), la deuxième marche (72) est utilisée pour soutenir le pare-brise avant (1b) et la troisième marche (73) est utilisée pour relier une couche adhésive en verre.

3. Véhicule selon la revendication 2, dans lequel la distance entre la première marche (71) et le premier corps de plaque (101) est égale à la somme de l'épaisseur du panneau de garniture de toit (2b) et d'un dégagement de sécurité prédéfini (H3) ;
la distance entre la deuxième marche (72) et le premier corps de plaque (101) est égale à la somme de l'épaisseur du panneau de garniture de toit (2b), de l'épaisseur du pare-brise avant (1b) et du dégagement de sécurité prédéfini (H3) ;
la distance entre la troisième marche (73) et la deuxième marche (72) est égale à la différence entre l'épaisseur de la couche adhésive en verre et du dégagement de sécurité prédéfini (H3).

4. Véhicule selon la revendication 3, dans lequel la première plaque de liaison (111) est pourvue d'une nervure triangulaire inclinée (92).

5. Véhicule selon la revendication 4, dans lequel le dégagement de sécurité prédéfini (H3) est supérieur à 3 mm ;
la distance entre une extrémité de la nervure triangulaire inclinée (92) proche du premier coin arrondi sphérique (82) et le pare-brise avant (1b) est supérieure à 3 mm, et la distance entre une extrémité de la nervure triangulaire inclinée (92) proche du second coin arrondi sphérique (81) et le panneau de garniture de toit (2b) n'est pas inférieure à 3 mm et n'est pas supérieure à 5 mm.

6. Véhicule selon la revendication 4, dans lequel le premier angle (03) entre la nervure triangulaire inclinée et la direction de poinçonnage n'est pas inférieur à 35 °.

7. Véhicule selon la revendication 4, dans lequel la nervure triangulaire inclinée (92) est en forme de trompette, dans lequel la largeur de la nervure triangulaire inclinée (92) au niveau de l'extrémité proche du second coin arrondi sphérique (81) est inférieure à la largeur de la nervure triangulaire inclinée (92) au niveau de l'extrémité proche du premier coin arrondi sphérique (82).

8. Véhicule selon la revendication 1, dans lequel le deuxième angle (02) entre la première arête en forme d'arc (31b) et la seconde arête en forme d'arc (32b) est supérieur à 60 °, le troisième angle (01) entre la première arête en forme d'arc (31b) et l'arête droite (33b) est supérieur à 135 °.

9. Véhicule selon la revendication 1, dans lequel le quatrième angle (04) entre la seconde arête en forme d'arc (32b) et la direction de poinçonnage est égal à 3 °.

10. Véhicule selon la revendication 2, dans lequel la largeur de la première marche (71) sur le côté proche du second coin arrondi sphérique (81) est égale à 3 mm ;
un premier point de soudure (P3) est prévu sur la première marche (71), et la largeur de la première marche (71) au niveau du premier point de soudure (P3) est égale à 16 mm.

11. Véhicule selon la revendication 10, dans lequel le troisième corps de plaque (103) est pourvu d'une nervure absorbant les plis (91).

12. Véhicule selon la revendication 11, dans lequel la profondeur de la nervure absorbant les plis (91) est égale à 2 mm.
